# EUROPEAN PATENT APPLICATION

(11) **EP 4 576 310 A1**
(43) Date of publication of application: **25.06.2025**
(21) Application number: 23855192.3
(22) Date of filing: 18.08.2023
(51) Int. Cl.: H01M 10/0587, H01M 10/42, H01M 10/04

(54) **ELECTRODE ASSEMBLY AND SECONDARY BATTERY COMPRISING SAME**

(30) Priority: 19.08.2022 KR 20220104376; 16.08.2023 KR 20230107156
(71) Applicant: LG Energy Solution, Ltd., Seoul 07335 (KR)
(72) Inventor: KIM, Nam Won, Daejeon 34122 (KR); KIM, Jung Hoon, Daejeon 34122 (KR)
(74) Representative: Goddar, Heinz J.
(86) International application number: PCT/KR2023/012286
(87) International publication number: WO 2024/039226

(57) **Abstract**

The present invention relates to an electrode assembly and a secondary battery including the same. The electrode assembly according to an embodiment of the present invention may be provided by winding a first electrode, a first separator, a second electrode, and a second separator, and the electrode assembly includes a protective member disposed in a space between each of the first separator and the second separator and an edge portion, at which the winding of the first electrode starts, and having a shape corresponding to that of at least a portion of the space.

## Description

### TECHNICAL FIELD

### CROSS-REFERENCE TO RELATED APPLICATION

The present application claims the benefit of the priority of Korean Patent Application Nos. 10-2022-0104376, filed on August 19, 2022, and 10-2023-0107156, filed on August 16, 2023, which are hereby incorporated by reference in their entirety.

### TECHNICAL FIELD

The present invention relates to an electrode assembly and a device including the same, and more specifically, to an electrode assembly capable of improving safety and a secondary battery including the same.

### BACKGROUND ART

Recently, as demands for portable electronic products such as laptops, video cameras, and mobile phones have rapidly increased, and development of electric vehicles, energy storage batteries, robots, satellites, etc. is regularized, a lot of researches have been conducted on a secondary battery used as a driving power source.

Rechargeable batteries are classified into coin type batteries, cylindrical type batteries, prismatic type batteries, and pouch type batteries according to a shape of a battery case. The electrode assembly mounted inside the battery case is a chargeable and dischargeable power generation device having a structure in which electrodes and separators are stacked.

When a charge/discharge cycle of the secondary battery including such the electrode assembly is repeated, swelling of the electrode assembly may occur, and a winding center of the electrode assembly may be deformed. If the winding center of the electrode assembly is not maintained in its original shape and is deformed, an internal short circuit or disconnection may occur during the charge/discharge cycle to significantly deteriorate the safety.

### DISCLOSURE OF THE INVENTION

### TECHNICAL PROBLEM

Embodiments of the present invention provide an electrode assembly capable of improving safety and a secondary battery including the same.

The object of the present invention is not limited to the aforesaid, but other objects not described herein will be clearly understood by those skilled in the art from descriptions below.

### TECHNICAL SOLUTION

An electrode assembly according to an embodiment of the present invention may be provided by winding a first electrode, a first separator, a second electrode, and a second separator, and the electrode assembly may include a protective member disposed in a space between each of the first separator and the second separator and an edge portion, at which the winding of the first electrode starts, and having a shape corresponding to that of at least a portion of the space.

According to an embodiment, the protective member may be disposed to surround the edge portion, at which the winding of the first electrode starts, at least once.

According to an embodiment, the first electrode may include: a first collector; and a first active material layer disposed on the first collector, wherein the protective member may be configured to surround a side surface of the first collector and a side surface of the first active material layer, which are provided in the first electrode.

According to an embodiment, the protective member may be in contact with the side surface of the first collector facing the winding center and the side surface of the first active material layer.

According to an embodiment, the protective member may include: a first protective member disposed between the first separator and the edge portion at which the winding of the first electrode starts; and a second protective member disposed between the second separator and the edge portion at which the winding of the first electrode starts.

According to an embodiment, a portion of each of the first protective member and the second protective member may be disposed to be in contact with each other between the first separator and the second separator.

According to an embodiment, at least one of the first protective member or the second protective member may be disposed to wind the non-coating portion of the second electrode at least once.

According to an embodiment, at least one of the first protective member or the second protective member may be wound at least once between the winding center of the electrode assembly and the edge portion at which the winding of the first electrode starts, and at least one of the first protective member or the second protective member may be wound at least once between a winding outer portion of the electrode assembly and the edge portion at which the winding of the first electrode starts.

According to an embodiment, in at least one of the first separator or the second separator, an area that is in contact with the protective member may have rigid greater than that of an area that is in non-contact with the protective member.

According to an embodiment, at least one of the first separator or the second separator may include a plurality of voids defined in the vicinity facing the protective member, and a portion of the protective member may be disposed in at least one void of the first separator and the second separator.

According to an embodiment, the protective member may be made of a thermoplastic resin.

According to an embodiment, the protective member may include a hot-melt adhesive sheet that is melted at a high temperature and returns to a solid state at a low temperature.

According to another embodiment, the protective member may be attached to only one of the first separator and the second separator.

A secondary battery according to an embodiment may include the above-described electrode assembly.

### ADVANTAGEOUS EFFECTS

According to the embodiments of the present invention, the electrode assembly may include the protective member disposed between the edge portion at which the winding of the positive electrode starts and the separator. The protective member and the separator may prevent the cracks of the negative electrode at the portion that is in contact with the edge portion of the positive electrode to prevent the disconnection or the short circuit, thereby improving the safety of the secondary battery.

In addition, according to the embodiments of the present invention, the winding center of the electrode assembly may be easily maintained in its original shape through the protective member and the separator. Therefore, the internal short circuits may be prevented from occurring during the charge/discharge cycle of the secondary battery including the electrode assembly to ensure the safety.

In addition, the various effects that are directly or indirectly identified through the present disclosure may be provided.

### BRIEF DESCRIPTION OF THE DRAWINGS

FIG. 1 is a perspective view of a secondary battery including an electrode assembly according to a first embodiment of the present invention.
FIG. 2 is an exploded perspective view illustrating an unfolded state before the electrode assembly of FIG. 1 is wound.
FIG. 3 is a cross-sectional view illustrating an unfolded state before the electrode assembly of FIG. 1 is wound.
FIG. 4a is an enlarged cross-sectional view illustrating an example of a portion adjacent to a winding center C of the electrode assembly according to the first embodiment of the present invention, and FIG. 4b is an enlarged cross-sectional view illustrating the other example of the portion adjacent to the winding center C of the electrode assembly according to the first embodiment of the present invention.
FIG. 5a is a view illustrating a portion of a protective member disposed on a separator before the electrode assembly is wound according to the first embodiment of the present invention, and FIG. 5b is a view illustrating a portion of the protective member disposed on the separator of FIG. 5a after a reform process.
FIG. 6 is a cross-sectional view illustrating an unfolded state before an electrode assembly is wound according to a second embodiment of the present invention.
FIG. 7 is a cross-sectional view illustrating a state after the electrode assembly of FIG. 6 is wound.
FIG. 8 is an enlarged cross-sectional view of an area "D" adjacent to a central side of the electrode assembly in FIG. 7.
FIG. 9 is a cross-sectional view of an electrode assembly according to a third embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following embodiments.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Secondary battery including electrode assembly according to first embodiment

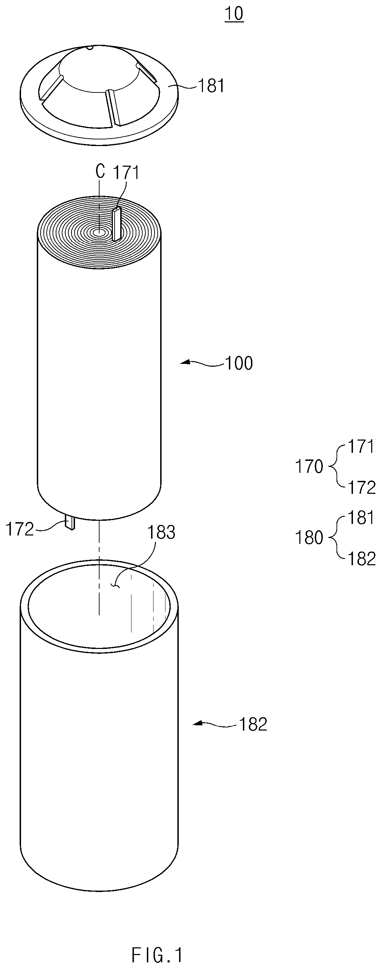

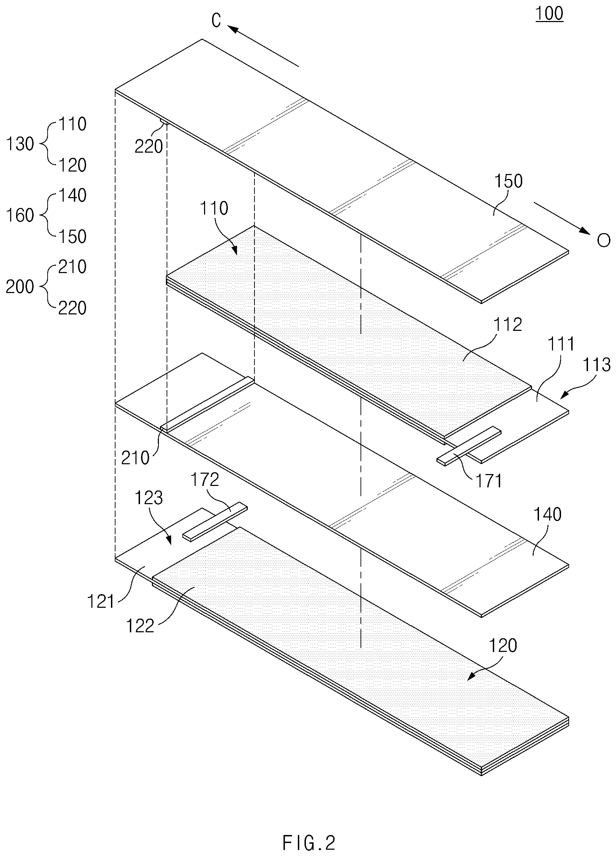

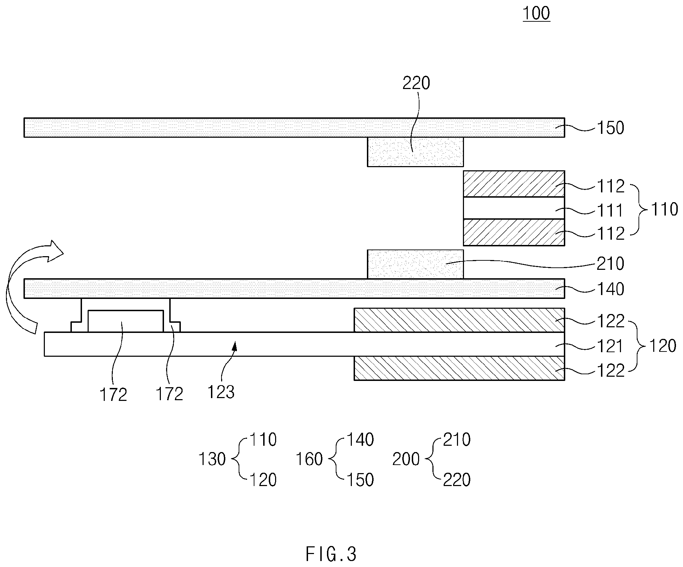

FIG. 1 is a perspective view of a secondary battery including an electrode assembly according to a first embodiment of the present invention, FIG. 2 is an exploded perspective view illustrating an unfolded state before the electrode assembly of FIG. 1 is wound, and FIG. 3 is a cross-sectional view illustrating an unfolded state before the electrode assembly of FIG. 1 is wound.

Referring to FIGS. 1 to 3, a secondary battery 10 according to a first embodiment of the present invention may include an electrode assembly 100 and a battery case 180.

The electrode assembly 100 may be accommodated in the battery case 180. The battery case 180 may include a battery can 182 and a cap assembly 181.

The battery can 182 may include an accommodation part 183 in which the electrode assembly 100 is accommodated. An electrolyte may be injected into the accommodation part 183 so that the electrode assembly 100 is completely immersed in the battery can 182. An upper portion of the battery can 182 may be opened to be used as an inflow passage of the electrode assembly 100. The battery can 182 may include a metal. For example, the battery can 182 may include stainless steel.

Since the battery can 182 accommodates the electrode assembly 100, the battery can 182 may be provided in a shape corresponding to that of the electrode assembly 100. For example, the battery can 182 may be provided in a cylindrical shape so that the electrode assembly 100, which is provided in a jelly-roll shape, is accommodated.

The cap assembly 181 may be mounted on the battery can 182 to cover the opened upper portion of the battery can 182 and be coupled to the battery can 182 The cap assembly 181 may be provided by sequentially stacking a safety belt, a current blocking element, a positive temperature coefficient (PTC) element, and a top cap. The top cap is seated and coupled to the uppermost portion of the cap assembly 181 to transmit current generated in the secondary battery to the outside.

One of the battery can 182 and the cap assembly 181 may be electrically connected to a first electrode tab 171 of the electrode assembly 100, and the other one of the battery can 182 and the cap 181 may be electrically connected to a second electrode tab 172 of the electrode assembly 100. As an example, the cap assembly 181 may be electrically connected to the first electrode tab 171 through a welding process, and a bottom surface of the battery can 182 may be electrically connected to the second electrode tab 172 through a welding process. As another example, one of the battery can 182 and the cap assembly 181 may be electrically connected to the first electrode tab 171 and the second electrode tab 172.

The electrode assembly 100 may be a chargeable and dischargeable power generating element. The electrode assembly 100 has a structure in which electrodes 130 and separators 160 are combined and alternately stacked. The electrode assembly 100 may be provided in a shape in which the electrodes 130 and the separators 160 are wound. The electrode assembly 100 may have a structure of which a diameter is expanded radially in proportion to the number of winding rotation. Here, the electrode assembly 100 may be wound in a cylindrical shape wound around a winding central axis C. As an example, the electrode assembly 100 may be an electrode assembly that is in the form of a jelly roll, which is wound in a cylindrical shape by sequentially stacking a first electrode 110, a first separator 140, a second electrode 120, and a second separator 150.

The electrode 130 may comprise the first electrode 110 and the second electrode 120. One of the first electrode 110 and the second electrode 120 may be an positive electrode, and the other one of the first electrode 110 and the second electrode 120 may be a negative electrode. For example, the first electrode 110 may be a positive electrode, and the second electrode 120 may be a negative electrode.

The first electrode 110 may include a first collector 111 and a first active material layer 112 disposed on at least one of one surface and the other surface of the first collector 111. For example, when the first electrode 110 is the positive electrode, the first collector 111 may be made of aluminum foil. The first active material layer 112 may include, for example, lithium manganese oxide, lithium cobalt oxide, lithium nickel oxide, lithium iron phosphate, or a compound containing at least one of these and mixtures thereof.

A portion of the first electrode 110 may include at least one first non-coating portion 113 constituted by the first collector 111 without the first active material layer 112. At least one first electrode tab 171 may be attached to the first non-coating portion 113 using a method such as welding. The first electrode tab 171 may be electrically connected to the first electrode 110. The first electrode tab 171 may be disposed on a winding outer portion O of the first electrode 110.

The second electrode 120 may include a second collector 121 and a second active material layer 122 disposed on at least one of one surface and the other surface of the second collector 121. For example, when the second electrode 120 is the negative electrode, the second collector 121 may be made of foil containing copper (Cu) or/and nickel (Ni). The second active material layer 122 may include, for example, synthetic graphite, lithium a metal, a lithium alloy, carbon, petroleum coke, activated carbon, graphite, a silicon compound, a tin compound, a titanium compound, or an alloy thereof. Here, the second active material layer 122 may include, for example, non-graphite-based silica (SiO) or silica carbide (SiC).

The second electrode 120 may be provided to be longer than the first electrode 110, and thus, an edge portion at which the winding of the second electrode 120 starts may be disposed to closer to the winding center C than an edge portion at which the winding of the first electrode 110 starts. Here, the edge portion of the first electrode 110 may include: at least one of a side surface of the first electrode at which the winding starts; a partial area of each of a first surface and a second surface of the first electrode 110 adjacent to the side surface of the first electrode 110, at which the winding starts; an edge at which the side surface of the first electrode 110, at which the winding starts, and each of the first surface and the second surface meet each other; an edge at which the side surface of the first electrode 110, at which the winding starts, and a side surface adjacent to the side surface meet each other; or a vertex at which the edge of the side surface of the first electrode 110, at which the winding starts, and an edge adjacent to the side surface meet each other.

A portion of the second electrode 120 may include at least one second non-coating portion 123 constituted by the second collector 121 without the second active material layer 122. At least one second electrode tab 172 may be attached to the second non-coating portion 123 using a method such as welding. The second electrode tab 172 may be electrically connected to the second electrode 120. At least one second electrode tab 172 may be disposed at the winding center C of the second electrode 120. As an example, the second electrode tab 172 may be disposed toward a bottom surface of the accommodation part 183 of the battery can 182 in a downward direction as illustrated in FIG. 1, and the first electrode tab 171 may be disposed in a direction, in which the electrode assembly 181 is disposed, i.e., in an upward direction. As another example, the first electrode tab 171 and the second electrode tab 172 may be disposed toward the battery can 182 or the cap assembly 181.

A protection tab 173 may be attached to at least one of the first electrode tab 171 and the second electrode tab 172. The protection tab 173 may alleviate a stepped portion provided by the electrode tabs 171 and 172 to prevent the separator 160 facing the electrode tab 15 from being damaged.

The separator 160 may separate the first electrode 110 from the second electrode 120 to electrically insulate the first and second electrodes 111 and 112 from each other. The separator 160 may comprise a first separator 140 and a second separator 150. The first separator 140 may be interposed between the first electrode 110 and the second electrode 120. The second separator 150 may be stacked at the outside of the first electrode 110 or the second electrode 120. For example, when a stack in which the first electrode 110, the first separator 140, the second electrode 120, and the second separator 150 are sequentially stacked is wound, the jelly roll-type electrode assembly 110 in which the second separator 150 is disposed on the outermost surface, may be provided.

The separator 160 may be, for example, a multilayered film produced by polyethylene, polypropylene, or a combination thereof or a polymer film for solid polymer electrolytes or gel-type polymer electrolytes such as polyvinylidene fluoride, polyethylene oxide, polyacrylonitrile, or polyvinylidene fluoride hexafluoropropylene copolymers.

The electrode assembly 100 according to the first embodiment of the present invention may include a protective member 200 disposed closer to the winding center C than the winding outer portion O. The protective member 200 may include a first protective member 210 and a second protective member 220.

The first protective member 210 may be disposed in a solid form between the edge portion at which the winding of the first electrode 110 starts and the first separator 140 before the electrode assembly 100 is wound. The first protective member 210 may be provided to be long on the first separator 140 in a width direction of the first separator 140. The first protective member 210 may be disposed parallel to at least one of the first electrode tab 171 and the second electrode tab 172 before the electrode assembly 100 is wound.

The second protective member 220 may be disposed in a solid form between the edge portion at which the winding of the first electrode 110 starts and the second separator 150 before the electrode assembly 100 is wound. The second protective member 220 may be provided on the second separator 140 in a width direction of the second separator 140. The second protective member 220 may be disposed parallel to at least one of the first electrode tab 171 and the second electrode tab 172 before the electrode assembly 100 is wound.

At least one of the first protective member 210 or the second protective member 220 may include a thermoplastic resin. The first protective member 210 and the second protective member 220 may be made of the same or different thermoplastic resin materials. For example, at least one of the first protective member 210 or the second protective member 220 may include a hot-melt adhesive sheet that is melted at a high temperature of 120 degrees to 140 degrees and returns to the solid state at a low temperature.

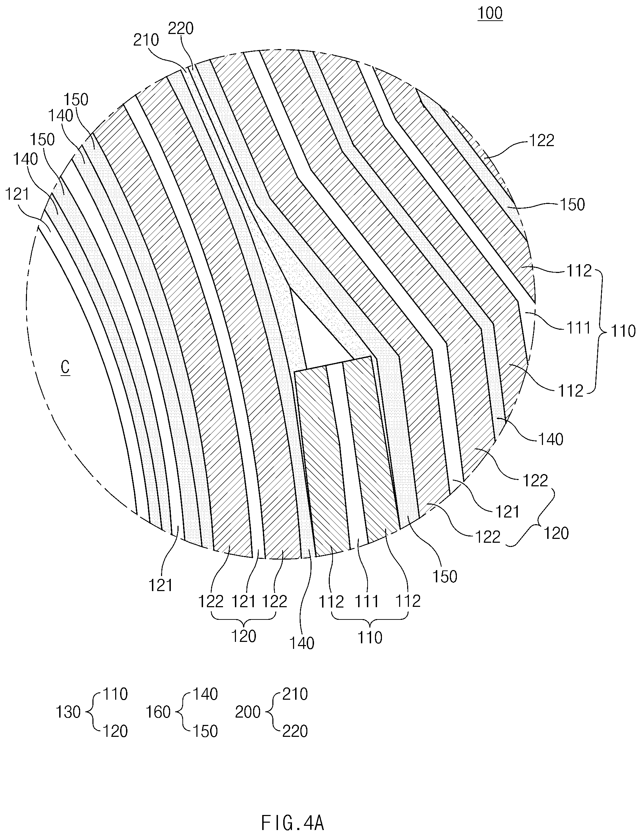

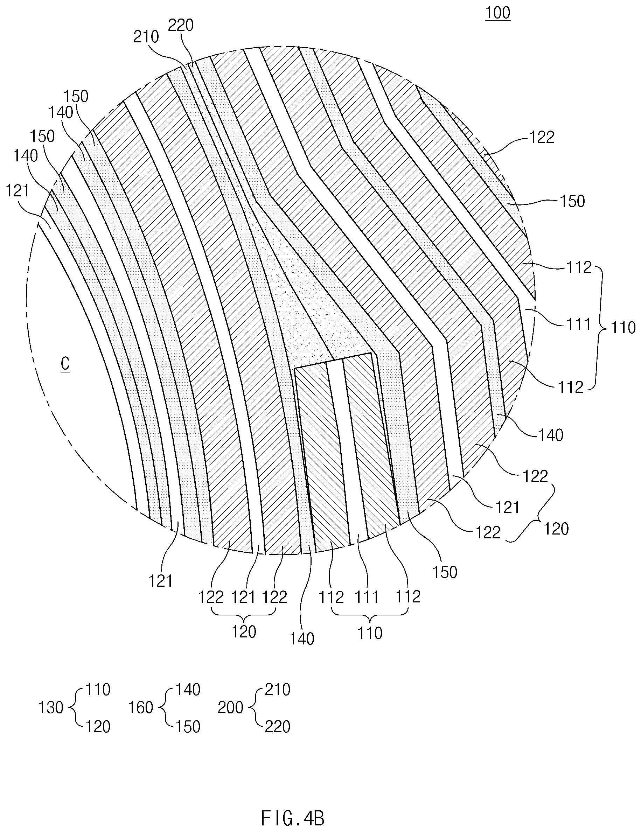

FIG. 4a is an enlarged cross-sectional view illustrating an example of a portion adjacent to the winding center C of the electrode assembly according to the first embodiment of the present invention, and FIG. 4b is an enlarged cross-sectional view illustrating the other example of the portion adjacent to the winding center C of the electrode assembly according to the first embodiment of the present invention.

Referring to FIGS. 4a and 4b, the electrode assembly 100 may include a first electrode (or positive electrode) 110, a first separator 140, a second electrode (or negative electrode) 120, a second separator 150, and a protective member 200. The protective member 200 may be disposed in a space between each of the first separator 140 and the second separator 150 and the edge portion at which the winding of the first electrode 110 starts. After winding the electrode assembly 100, the protective member 200 may have a shape corresponding to at least a portion of the space between each of the first separator 140 and the second separator 150 and the edge portion at which the winding of the first electrode 110 starts. The protective member 200 may include a first protective member 210 and a second protective member 220.

The first protective member 210 and the second protective member 220 may be melted in a first high-temperature manufacturing process after the electrode assembly 100 is wound. Since each of the molted first protective member 210 and second protective member 220 are in a liquid state, the first protective member 210 and the second protective member 220 may be introduced between the first separator 140 and the second separator 150 toward the winding center C and also may be introduced into the space between each of the first separator 140 and the second separator 150 and the first electrode 110. The melted first protective member 210 and second protective member 220 may be solidified again in a second low-temperature manufacturing process. Thus, the first protective member 210 and the second protective member 220 may not only provided to be in contact with each other between the first separator 140 and the second separator 150, but also provided to be in contact with each other in a partial space between each of the first separator 140 and the second separator 150 and the edge portion at which the winding of the first electrode 110 starts. The first protective member 210 and the second protective member 220 may be provided to surround a side surface of the first active material layer 112 and a side surface of the first collector 111 of the first electrode 110, which is provided on the edge portion, at which the winding of the first electrode 110 starts.

After the second low-temperature manufacturing process, the first protective member 210 may be disposed between the edge portion, at which the winding of the first electrode 110 starts, and the first separator 140. The first protective member 210 may be provided to surround at least a portion of the edge portion, at which the winding of the first electrode 110 starts, on the first separator 140. The first protective member 210 may be provided to surround the edge portion of the first electrode 110 corresponding to an edge between the side surface of the first active material layer 112 facing the winding center C and one surface of the first active material layer 112 facing the first separator 140. The first protective member 210 may be provided to surround at least a portion of the edge portion, at which the winding of the first electrode 110 starts, at least once.

After the second low-temperature manufacturing process, the second protective member 220 may be disposed between the edge portion, at which the winding of the first electrode 110 starts, and the second separator 150. The second protective member 220 may be provided to surround at least a portion of the edge portion, at which the winding of the first electrode 110 starts, on the second separator 150. The second protective member 220 may be provided to surround the edge portion of the first electrode 110 corresponding to an edge between the side surface of the first active material layer 112 facing the winding center C and the other surface of the first active material layer 112 facing the second separator 150. The second protective member 220 may be provided to surround at least a portion of the edge portion, at which the winding of the first electrode 110 starts, at least once.

For example, as illustrated in FIG. 4a, the first protective member 210 and the second protective member 220 may be provided to be spaced apart from each other on an area adjacent to the edge portion of the first electrode 110. At least one of the first protective member 210 or the second protective member 220 illustrated in FIG. 4a may be provided to cover at least a portion of the side surface of the first active material layer 112 except for the side surface of the first collector 111 facing the winding center C. At least one of the first protective member 210 or the second protective member 220 illustrated in FIG. 4a may be in non-contact with the side surface of the first collector 111 facing the winding center C and be in contact with the side surface of the first active material layer 112.

As another example, as illustrated in FIG. 4b, the first protective member 210 and the second protective member 220 may be provided to be integrated with each other by being in contact with each other on the area adjacent to the edge portion of the first electrode 110. At least one of the first protective member 210 or the second protective member 220 illustrated in FIG. 4b may be provided to cover the side surface of the first collector 111 facing the winding center C and the side surface of the first active material layer 112. At least one of the first protective member 210 or the second protective member 220 illustrated in FIG. 4b may be in contact with the side surface of the first collector 111 facing the winding center C and the side surface of the first active material layer 112.

As described above, the sharp edge portion of the first electrode 110 may be covered by the first protective member 210 and the second protective member 220 to prevent the first separator 140 and the second separator 150 from being damaged by the edge portion of the first electrode 110.

The first high-temperature manufacturing process may be a partial process of the reform process or the entire reform process. For example, the high temperature may be a temperature of 120 degrees to 140 degrees. The second low-temperature manufacturing process may be a process performed at a lower temperature than in the first manufacturing process. The second manufacturing process may be a process performed immediately after the first manufacturing process or after a predetermined time elapses after the first manufacturing process is ended. The second manufacturing process may be another partial process of the reform process or a process performed after the reform process. When a core (not shown) used when winding the electrode assembly 100 is removed from the electrode assembly 100, the reform process may be a process in which the first separator 140 and/or the second separator 150, which are separated to the outside together with the core returns to the winding center C of the electrode assembly 100.

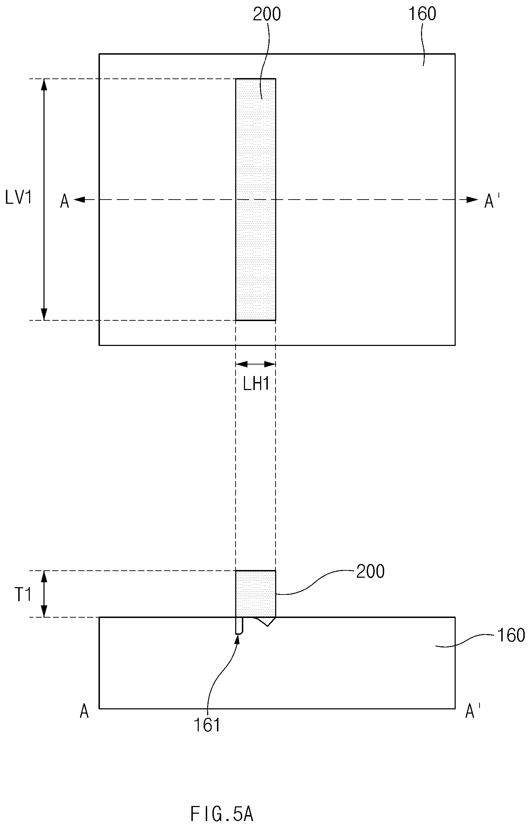

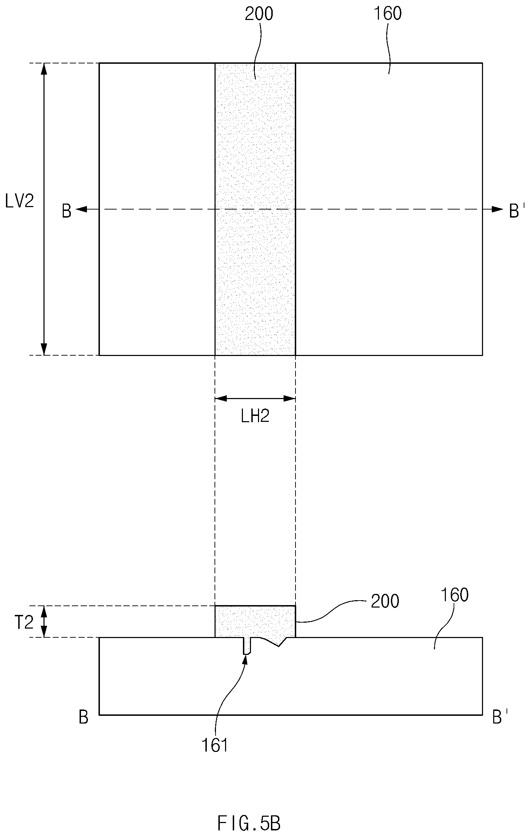

FIG. 5a is a view illustrating a portion of a protective member disposed on a separator before the electrode assembly is wound according to the first embodiment of the present invention, and FIG. 5b is a view illustrating a portion of the protective member disposed on the separator of FIG. 5a after a reform process. The separator 160 illustrated in FIGS. 5a and 5b may be at least one of the first separator 140 or the second separator 150 illustrated in FIGS. 4a and 4b, and the protective member 200 illustrated in FIGS. 5a and 5b may be at least one of the first protective member 210 and the second protective member 220 illustrated in FIGS. 4a and 4b.

The protective member 200 before winding the electrode assembly may have a first horizontal length LH1, a first vertical length LV1, and a first thickness T1 on the separator 160 as illustrated in FIG. 5a.

In the first high-temperature manufacturing process (e.g., reform process) after winding the electrode assembly, the protective member 200 may be melted in a liquid state. The molted liquid protective member 200 may be expanded to an adjacent area and then be introduced into a void 161 of the separator 160 that is in contact with the protective member 200. Thereafter, the protective member 200 may be hardened and solidified in the second low-temperature manufacturing process. Thus, as illustrated in FIG. 5b, the protective member 200 may be solidified with a thinner thickness and a larger surface area than before the winding process. That is, the protective member 200 after the first high-temperature manufacturing process may have a second horizontal length LH2 that is longer than the first horizontal length LH1, a second vertical length LV2 that is longer than the first vertical length LV1, and a second thickness T2 that is thinner than the first thickness T1.

According to an embodiment, the void may not be formed in at least a portion of the separator 160 facing the electrode 130. In the first high-temperature process, the conductive material contained in the electrode 130 may be prevented from being introduced into the void of the separator 160.

According to an embodiment, the separator 160 may include a plurality of voids 161 formed in the vicinity facing the protective member 200. A portion of the liquid protective member 200 may be introduced into the voids of the separator 160 and then be solidified, and thus, the voids 161 of the separator 160 may be filled with the protective member 200. Thus, an area of the separator 160 that is in contact with the protective member 200 may be provided to have higher rigidity than an area that is not in contact with the protective member 200. The separator 160 may have higher rigidity on an area disposed near the winding center C of the electrode assembly 100 than on an area disposed near the winding outer portion O of the electrode assembly 100. The winding center C of the electrode assembly 100 may be easily maintained in its circular shape through the highly rigid separator 160 and the protective member 200 near the winding center C of the electrode assembly 100. Therefore, the internal short circuits may be prevented from occurring during a charge/discharge cycle of the secondary battery including the electrode assembly 100 to ensure the safety.

### Electrode assembly according to second embodiment

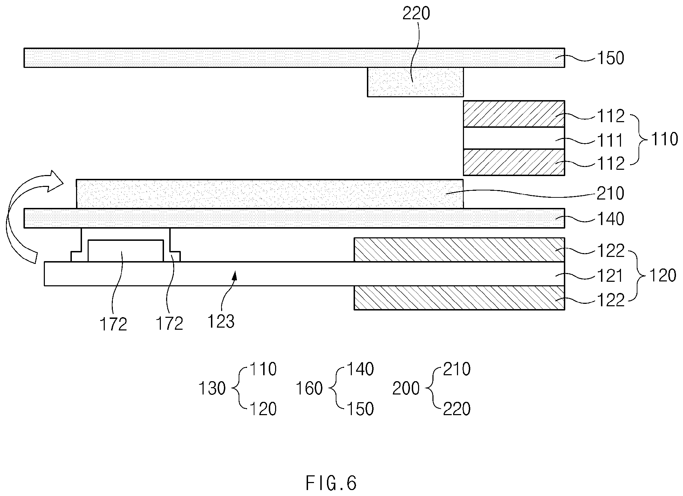

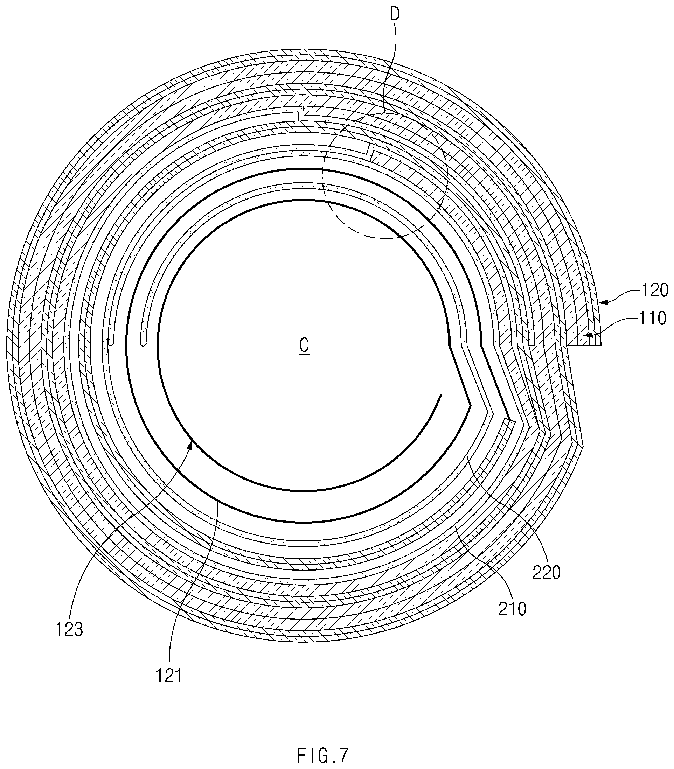

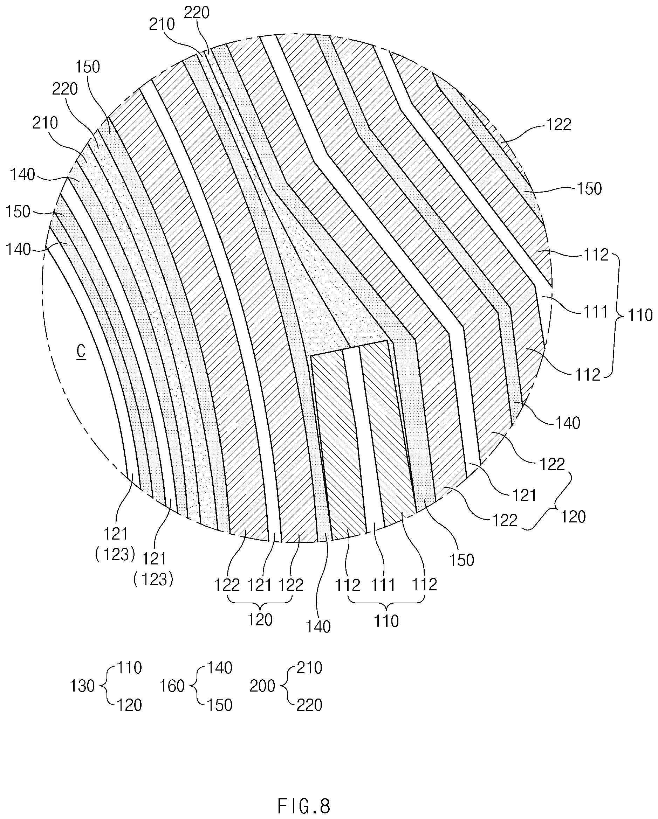

FIG. 6 is a cross-sectional view illustrating an unfolded state before an electrode assembly is wound according to a second embodiment of the present invention. FIG. 7 is a cross-sectional view illustrating a state after the electrode assembly of FIG. 6 is wound, and the first separator and the second separator illustrated in FIG. 6 are omitted. FIG. 8 is an enlarged cross-sectional view of a portion "D" adjacent to a central side of the electrode assembly in FIG. 7.

An electrode assembly according to the second embodiment of the present invention has the same components as the electrode assembly according to the first embodiment of the present invention illustrated in FIGS. 1 to 5b except for a protective member. Thus, detailed descriptions of the same components will follow the descriptions of FIGS. 2 to 5b.

Referring to FIGS. 6 to 8, an electrode assembly according to the second embodiment of the present invention may include a first protective member 210 and a second protective member 220.

At least one of the first protective member 210 or the second protective member 220 may be provided to be wound at least once between a winding outer portion O and an edge portion at which winding of a first electrode 110 starts. The first protective member 210 and the second protective member 220 may be provided to surround at least a portion of the edge portion at which the winding of the first electrode 110 starts. The first protective member 210 and the second protective member 220 may be provided to wind the edge portion, at which the winding of the first electrode 110 starts, at least once. As described above, the sharp edge portion of the first electrode 110 may be covered by the first protective member 210 and the second protective member 220 to prevent the first separator 140 and the second separator from being damaged by the edge portion of the first electrode 110.

At least one of the first protective member 210 or the second protective member 220 may be elongated toward the winding center C of the electrode assembly 100 from an area adjacent to the edge portion of the first electrode 110. At least one of the first protective member 210 or the second protective member 220 may be provided to overlap the second electrode tab 172 before the electrode assembly 100 is wound. For example, the first protective member 210 may be provided to overlap the second electrode tab 172 before the electrode assembly is wound.

At least one of the first protective member 210 or the second protective member 220 may be wound at least once between the winding center C and the edge portion at which the winding of the first electrode 110 starts. At least one of the first protective member 210 or the second protective member 220 may be disposed near the winding center C at which a non-coating portion 123 constituted by a second collector 121 of the second electrode 120 is disposed. At least one of the first protective member 210 or the second protective member 220 may be disposed between the first separator 140 and the second separator 150, which are near the winding center C.

The first protective member 210 and the second protective member 220 may be provided to surround the winding center C of the electrode assembly at least once. The non-coating portion 123 constituted by the second collector 121 of the second electrode 120 may be wound at least once. The winding center C of the electrode assembly may be easily maintained in its original shape through the highly rigid first separator 140 and second separator 150 near the center C, and the first protective member 210 and the second protective member 220. Therefore, the internal short circuits may be prevented from occurring during the charge/discharge cycle of the secondary battery including the electrode assembly to ensure the safety.

### Electrode assembly according to third embodiment

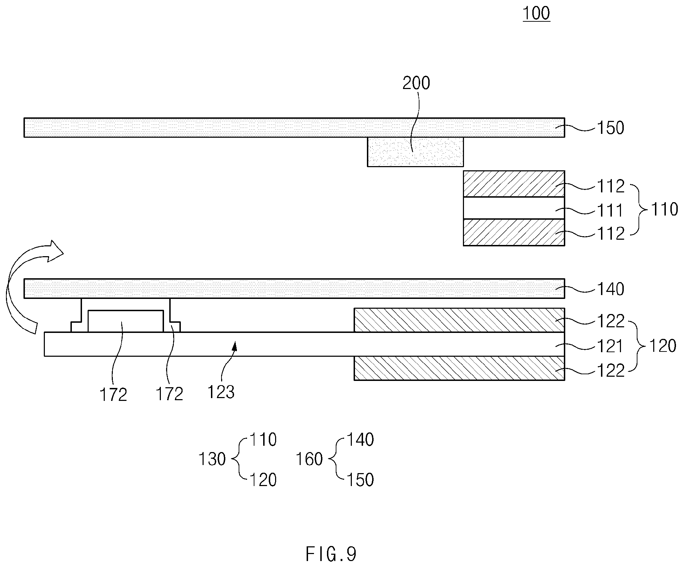

FIG. 9 is a cross-sectional view of an electrode assembly according to a third embodiment of the present invention. FIG. 9 is a view illustrating a portion of the electrode assembly according to the third embodiment of the present invention to correspond to FIG. 3.

An electrode assembly according to the third embodiment of the present invention has the same components as the electrode assembly according to the first embodiment of the present invention illustrated in FIGS. 1 to 5b except for a protective member. Thus, detailed descriptions of the same components will follow the descriptions of FIGS. 2 to 5b.

Referring to FIG. 9, an electrode assembly according to the third embodiment of the present invention may be attached to only one of a first separator and a second separator. In FIG. 9, a protective member is illustrated to be attached only to the second separator, but the present invention is not limited thereto. That is, the protective member may be provided to be attached only to the first separator or may be provided to be attached only to the second separator. If necessary, the protective member may be attached to only one of the first separator and the second separator.

In a case in which it is not necessary to attach the protective member to both the first and second separators depending on a shape of the electrode or conditions for forming the electrode assembly, since there is no need to attach the protective member to both the first separator and the second separator, resulting in material waste and deteriorated production efficiency, the protective member may be attached to only one of the first separator and the second separator to prevent the material waste and the deteriorated production efficiency from occurring.

The secondary battery including the above-described electrode assembly may be applied to various devices. It may be applied to transportation means such as electric bicycles, electric vehicles, hybrids, etc., but is not limited thereto and may be applied to various devices capable of using the battery module.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

100: Electrode assembly
110: First electrode
120: Second electrode
140: First separator
150: Second separator
171,172: Electrode tab
210: First protective member
220: Second protective member

## Claims

1. An electrode assembly provided by winding a first electrode, a first separator, a second electrode, and a second separator, the electrode assembly comprising:
a protective member disposed in a space between each of the first separator and the second separator and an edge portion, at which the winding of the first electrode starts, and having a shape corresponding to that of at least a portion of the space,
wherein the protective member comprises a hot-melt adhesive sheet that is melted at a high temperature and returns to a solid state at a low temperature.

2. The electrode assembly of claim 1, wherein the protective member is disposed to surround the edge portion, at which the winding of the first electrode starts, at least once.

3. The electrode assembly of claim 1, wherein the first electrode comprises:
a first collector; and
a first active material layer disposed on the first collector,
wherein the protective member is configured to surround a side surface of the first collector and a side surface of the first active material layer, which are provided in the first electrode.

4. The electrode assembly of claim 3, wherein the protective member is in contact with the side surface of the first collector facing the winding center and the side surface of the first active material layer.

5. The electrode assembly of claim 1, wherein the protective member comprises:
a first protective member disposed between the first separator and the edge portion at which the winding of the first electrode starts; and
a second protective member disposed between the second separator and the edge portion at which the winding of the first electrode starts.

6. The electrode assembly of claim 5, wherein a portion of each of the first protective member and the second protective member is disposed to be in contact with each other between the first separator and the second separator.

7. The electrode assembly of claim 4, wherein at least one of the first protective member or the second protective member is disposed to wind the non-coating portion of the second electrode at least once.

8. The electrode assembly of claim 1, wherein at least one of the first protective member or the second protective member is wound at least once between the winding center of the electrode assembly and the edge portion at which the winding of the first electrode starts, and
at least one of the first protective member or the second protective member is wound at least once between a winding outer portion of the electrode assembly and the edge portion at which the winding of the first electrode starts.

9. The electrode assembly of claim 1, wherein, in at least one of the first separator or the second separator, an area that is in contact with the protective member has rigid greater than that of an area that is in non-contact with the protective member.

10. The electrode assembly of claim 1, wherein at least one of the first separator or the second separator comprises a plurality of voids defined in the vicinity facing the protective member, and
a portion of the protective member is disposed in at least one void of the first separator and the second separator.

11. The electrode assembly of claim 1, wherein the protective member is made of a thermoplastic resin.

12. The electrode assembly of claim 1, wherein the protective member is attached to only one of the first separator and the second separator.

13. A secondary battery comprising the electrode assembly of any one of claims 1 to 12.
